# EUROPÄISCHE PATENTSCHRIFT

(11) **EP 1 201 169 B1**
(45) Veröffentlichungstag und Bekanntmachung des Hinweises auf die Patenterteilung: **28.07.2004**
(21) Anmeldenummer: 01125625.2
(22) Anmeldetag: 26.10.2001
(51) Int. Cl.: A47J 43/07

(54) **Küchenmaschine mit einem Rührgefäss**
Kitchen machine with a stirrer vessel
Robot ménager avec bol mixeur

(30) Priorität: 27.10.2000 DE 10053319
(43) Veröffentlichungstag der Anmeldung: 02.05.2002
(73) Patentinhaber: Vorwerk & Co. Interholding GmbH, 42275 Wuppertal (DE)
(72) Erfinder: Weber, Klaus-Martin, 42281 Wuppertal (DE); Rettich, Thornsten, Dr., 45133 Essen (DE); Pszola, Peter, 53123 Bonn (DE)
(74) Vertreter: Müller, Enno, Dipl.-Ing.

(56) Entgegenhaltungen:
- DE-A- 2 928 107
- DE-A- 4 414 821
- DE-A- 19 818 506
- GB-A- 2 031 095

## Beschreibung

Die Erfindung betrifft eine Küchenmaschine mit einem Rührgefäß und einem Antrieb für ein Rührwerk in dem Rührgefäß, wobei das Rührgefäß mittels eines sicherbaren Deckels verschließbar ist.

Eine derartige Küchenmaschine ist bspw. aus der DE-A1 44 14 821 bekannt. Bei dieser bekannten Ausgestaltung erfolgt ein Verschließen des Rührgefäßes durch einen axial abgedichteten Deckel, welcher mit Hilfe einer Bajonett-Verriegelung an dem Rührgefäß gefesselt wird. Diese Bajonett-Verriegelung erfolgt über einen, in dem Handgriff des Rührgefäßes verschwenkbar angeordneten Handhebel, welcher koaxial zu seiner Drehachse in dem Handgriff eine Verlagerungsstange aufweist. Letztere wirkt in der Küchenmaschine bei in dieser eingesetztem Rührgefäß mit einer, um ihre Körperachse drehbaren Betätigungsstange zusammen, über welche gleichzeitig zur Bajonett-Verriegelung des Deckels auf dem Rührgefäß eine Verspannung des Rührgefäßes in der Küchenmaschine erfolgt.

Bei einer weiteren, aus der DE 198 18 506 bekannten Küchenmaschine ist eine Drucktaste vorgesehen, die eine Wippe betätigt, welche wiederum eine Kupplungshülse in dem Antriebsschaft der Maschine anhebt, derart, dass der Antrieb dann entkoppelt ist. Durch Drehen des Deckels der Küchenmaschine ist die entkoppelte Stellung gesichert. Die Sicherungsstellung muss durch Drehen des Deckels wieder aufgehoben werden.

Im Hinblick auf den zuvor beschriebenen Stand der Technik ist es Aufgabe der Erfindung, eine Küchenmaschine mit einem Rührgefäß der in Rede stehenden Art in vorteilhafter Weise weiterzubilden.

Diese Aufgabe ist beim Gegenstand des Anspruches 1 gelöst. Zufolge dieser Ausgestaltung werden durch einen einfachen Aufbau bestehende Sicherheitsanforderungen erfüllt. Durch automatisches, federunterstütztes Auskoppeln des Rührwerklagers aus der Antriebskupplung wird bei einem Öffnen des Rührgefäßdeckels sichergestellt, dass ein Rührwerkstillstand in einer vorgegebenen Zeit von bspw. maximal 1,5 Sekunden erfolgt. Zudem wird durch die erfindungsgemäße Ausgestaltung neben der Erfüllung dieser Sicherheitsvorschriften eine Mehrfachfunktion durch gleichzeitiges Verriegeln des Rührtopfes in der Küchenmaschine und Festlegung des Deckels auf dem Rührgefäß erzielt. Weiter erfolgt durch das Aufsetzen des Deckels eine Sicherheitsabfrage derart, dass eine Inbetriebnahme insbesondere des Rührwerkes nur bei aufgesetztem und verriegeltem Deckel erfolgen kann. Durch den oder die am Rührgefäß angeordneten Gefäßgriffe kann durch geeignete Konturgebung am Grundgerät eine eindeutige Vorpositionierung der Abtriebsachse und gegebenenfalls elektrischer Kontakte erzielt werden. Ferner kann eine formschlüssige Kontur zwischen Gefäßgriff und Grundgerät zur Aufnahme der im Betrieb des Rührwerkes auftretenden Drehmomente genutzt werden. Als besonders vorteilhaft erweist sich, dass durch die erfindungsgemäße Ausgestaltung keine mechanische oder elektrische Bremsung des Rührwerkes bei einem Öffnen des Deckels erforderlich ist. Ein Öffnen des Rührgefäßdeckels ist zwangsgebunden mit einer Aufhebung der Verspannung des Rührgefäßes in der Küchenmaschine, woraufhin das Rührgefäß bspw. aufgrund der Federvorspannung angehoben wird, was ein Entkoppeln von Antrieb und in dem Rührgefäß angeordnetem Rührwerk zur Folge hat. Alternativ kann auch vorgesehen sein, dass lediglich der Antrieb bzw. eine das Rührwerk und den Antrieb verbindende Kupplungsmuffe oder dergleichen federunterstützt bei einem Öffnen des Deckels außer Eingriff zum Rührwerk gebracht wird, bspw. durch Absenken. Weiter alternativ kann bei einer Küchenmaschine der in Rede stehenden Art, wobei weiter das Rührgefäß einen Rührgefäßfuß aufweist, vorgesehen sein, dass der Rührgefäßfuß Federzungen ausbildet. Zufolge dieser Ausgestaltung ist die, die Entkopplung von Antrieb und Rührwerk herbeiführende Feder integraler Bestandteil des Rührgefäßes. Auch hierbei wird das Rührgefäß bei einem Öffnen des Deckels und damit einhergehender Aufhebung der Einspannung des Rührgefäßes in der Küchenmaschine mittels der im Rührgefäßfuß ausgebildeten Federzungen angehoben. Unabhängig von der Ausgestaltung des, das Rührgefäß anhebenden Federelementes muss dieses derart bemessen sein, dass ein Anheben des gefüllten Rührgefäßes zur Trennung von Antrieb und Rührwerk stets gegeben ist. Zufolge vorliegender Erfindung erfolgt eine mechanische Trennung von Antrieb und Rührwerk, sobald der Deckel des Rührgefäßes geöffnet wird. In einer bevorzugten Ausgestaltung bleibt das Rührwerk nach einem Öffnen des Deckels in weniger als einer Sekunde stehen.

Die Erfindung ist nachstehend anhand der beigefügten Zeichnung, welche lediglich drei Ausführungsbeispiele darstellt, näher erläutert. Es zeigt:
- Fig. 1: eine erfindungsgemäße Küchenmaschine mit einem Rührgefäß in einer Seitenansicht;
- Fig. 2: eine vergrößerte Schnittdarstellung des, den unteren Bereich des Rührgefäßes aufnehmenden Bereiches der Küchenmaschine, in der Verriegelungsstellung des Rührgefäßes in einer ersten Ausführungsform;
- Fig. 3: den Schnitt gemäß der Linie III-III in Fig. 2 bei nicht eingesetztem Rührgefäß;

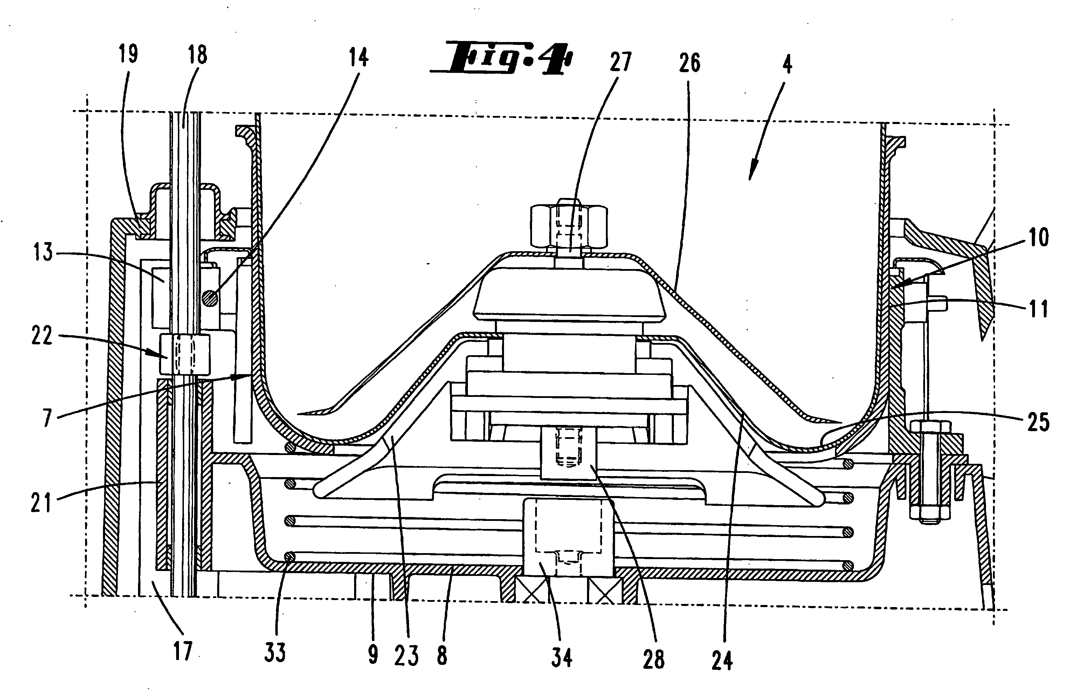

- Fig. 4: eine der Fig. 2 entsprechende Schnittdarstellung, jedoch die Entriegelungsstellung des Rührgefäßes betreffend;
- Fig. 5: eine der Fig. 2 entsprechende Darstellung, jedoch eine zweite Ausführungsform betreffend;
- Fig. 6: eine der Fig. 1 entsprechende Darstellung, eine dritte Ausführungsform betreffend.

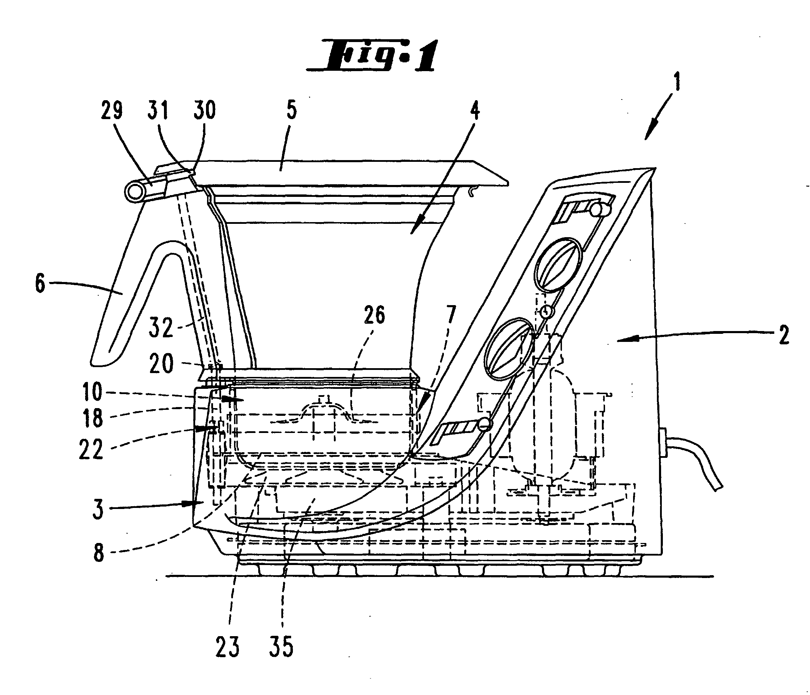

Dargestellt und beschrieben ist zunächst mit Bezug zu Fig. 1 eine Küchenmaschine 1, welche sich im wesentlichen zusammensetzt aus einem Bedien-/Steuerungsbereich 2 und einem Aufnahme-Arbeitsbereich 3. Letzterer ist topfförmig und in der Projektion etwa kreisrund ausgebildet.

In dem Aufnahme-Arbeitsbereich 3 ist ein kannenartiges Rührgefäß 4 halterbar, dessen nach oben weisende Öffnung mittels eines abnehmbaren Deckels 5 verschlossen ist. Das Rührgefäß 4 ist desweiteren außenseitig mit einem Handgriff 6 versehen.

Zur Halterung des Rührgefäßes 4 ist in dem Aufnahme-Arbeitsbereich 3 eine Aufnahme 7 vorgesehen, welche sich im wesentlichen aus einer, einen Aufnahmeboden 8 bildenden Gehäuseplatte 9 und einer koaxial zum Rührgefäß 4 angeordneten Manschette 10 zusammensetzt.

Die den Aufnahmeboden 8 bildende Gehäuseplatte 9 ist in dem Aufnahmebereich topfartig ausgebildet, wobei der Aufnahmeboden 8 koaxial zur Vertikalachse des Rührgefäßes 4 ausgerichtet ist. Über diesem topfartigen Bereich ist die ebenfalls koaxial zur Vertikalachse des Rührgefäßes 4 angeordnete Manschette 10 vorgesehen.

Letztere bildet einen vertikal ausgerichteten, im wesentlichen zylindrischen Wandbereich 11 aus, wobei die Manschette 10 weiter einen nicht geschlossenen, im wesentlichen kreisförmigen Grundriss aufweist. Das Profil des Wandbereiches 11 ist flach gehalten.

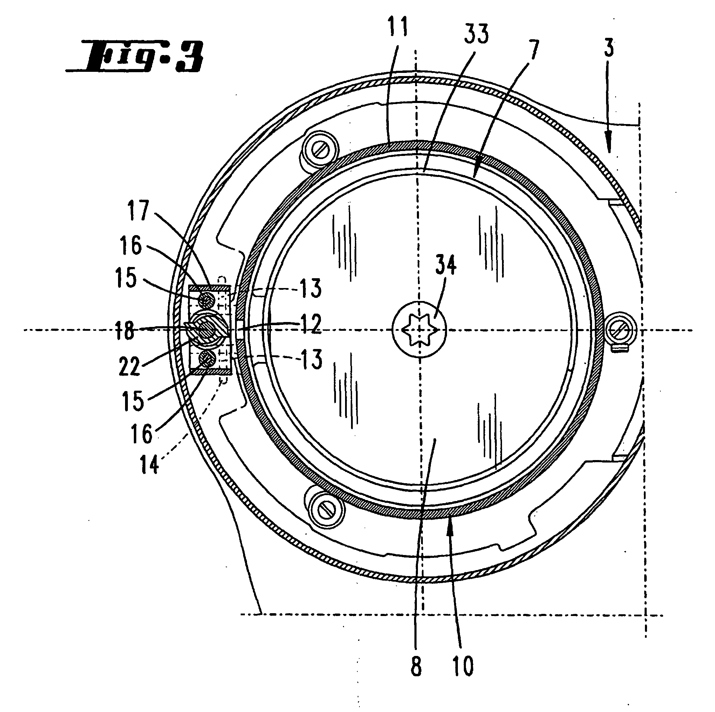

Wie aus der Schnittdarstellung in Fig. 3 zu erkennen, ist die Manschette 10 mit einem sich über die gesamte Höhe derselben erstreckenden Schlitz 12 versehen. An den durch den Schlitz 12 gebildeten freikragenden Enden sind nach außen gerichtete, d. h. an der Außenwandung der Manschette 10 angeordnete und vom Zentrum der Manschette 10 abweisende Flansche 13 vorgesehen.

Die Flansche 13 der Manschette 10 sind von einem horizontal ausgerichteten Stift 14 durchsetzt, dessen Enden seitlich aus den Flanschen 13 herausragen. An diesen Enden ist der Stift 14 in seiner Axialrichtung gesichert.

Der Flansch 13 besitzt desweiteren einen, den Flansch 13 vertikal durchsetzenden Steuerstift 15, der nach unten hin über die Unterseite des jeweiligen Flansches 13 hinausragt, wobei auf den freien Enden der Steuerstifte 15 Drehhülsen 16 aufgeschoben sind.

Weiterhin ist eine U-förmige Blattfeder 17 vorgesehen, deren U-Schenkel nach oben weisen. Die freien Enden der U-Schenkel der Blattfeder 17 wirken von außen, seitlich auf die Flansche 13, womit diese aufeinander zu federvorgespannt sind. Zwischen den beiden Flanschen 13 tritt eine um eine Vertikalachse drehbare Betätigungsstange 18. Das obere Ende der Betätigungsstange 18 ragt über eine Gehäusedecke 19 des Küchenmaschinengehäuses hinaus und weist dort einen horizontal ausgerichteten Mitnahmezapfen 20 auf.

Die Betätigungsstange 18 erstreckt sich nach Durchtritt durch die Gehäusedecke 19 bis in den unteren Bereich der U-förmigen Blattfeder 17 und ist in einer an der Gehäuseplatte 9 angeformten Hülse 21 drehbar gelagert.

Auf Höhe der Drehhülsen 16 der Flansche 13 trägt die Betätigungsstange 18 drehfest einen Spreizknebel 22. Dessen Mantelfläche bildet Steuerflächen aus, welche in konvexe, sich gegenüberliegende Anlageflächen übergehen. In einem Randbereich jeder Anlagefläche ist eine Anschlagnase angeformt.

Das Rührgefäß 4 stützt sich in der Aufnahme 7 mittels eines Rührgefäßfusses 23 auf dem Aufnahmeboden 8 der Küchenmaschine 1 ab. Dieser Rührgefäßfuss 23 ist koaxial zur Vertikalachse des Rührgefäßes 4 in einem eingezogenen Bereich 24 des Rührgefäßbodens 25 angeordnet.

Koaxial zur Vertikalachse des Rührgefäßes 4 ist dieses im Bereich des Rührgefäßbodens 25 mit einem Rührwerk 26 versehen, welches mittels einer kugelgelagerten Halterung am Rührgefäßboden 25 angeordnet ist. Das Rührwerk 26 ist auf einer Welle 27 in der Halterung drehbar gelagert, wobei die Welle 27 an ihrem unteren, den Rührgefäßboden 25 durchsetzenden Ende ein Kupplungsglied 28 besitzt.

Im Übergangsbereich zwischen dem Handgriff 6 und dem Deckel 5 des Rührgefäßes 4 ist an dem Handgriff 6 ein daumenbetätigbarer Handhebel 29 verschwenkbar angeordnet. Dieser weist einen, mit einem zuordbaren Schlitz 30 des Deckels 5 zusammenwirkbaren Radialsteg 31 auf. Bei aufgesetztem Deckel 5 bewirkt eine Drehverlagerung des Handhebels 29 in eine Deckel-Verriegelungsstellung einen bajonettartigen Verschluss zur Festlegung des Deckels 5 auf dem Rührgefäß 4.

Koaxial zu der Drehachse des Handhebels 29 ist in dem Handgriff 6 eine Verlagerungsstange 32 vorgesehen, deren oberes Ende drehfest mit dem Handhebel 29 verbunden ist. Das untere freie Ende der Verlagerungsstange 32 ist gabelförmig ausgebildet. Nach Einsetzen des Rührgefäßes 4 in die Aufnahme 7 greift dieses Gabelende über das über die Gehäusedecke 19 hinausragende Ende der Betätigungsstange 18 und fängt hierbei den dort angeordneten Mitnahmezapfen 20 ein. Demzufolge bewirkt eine daumenbetätigbare Verschwenkung des Handhebels 29 eine damit einhergehende Verdrehung der Betätigungsstange 18 bei gleichzeitiger Festlegung des Deckels 5 an dem Rührgefäß 4.

Es wird bevorzugt, dass nach Einsetzen des Rührgefäßes 4 in die Aufnahme 7 ein Verschwenken des Handhebels 29 um 90° erfolgt. Entsprechend vollzieht auch der Spreizknebel 22 eine Verdrehung um 90°. In dieser Stellung weist der Spreizknebel 22 einen solch kleinen Durchmesser auf, dass die sich mittels den Hülsen 21 an der Außenwandung des Spreizknebels 22 abstützenden Flansche 13 sich aufeinander zu bewegen, bedingt durch die Federkraft der Blattfeder 16. Hierdurch bedingt erfolgt auch eine Bewegung der freien Enden der Manschette 10 in eine Gegenüberstellung, wodurch eine Verringerung des Durchmessers des Wandbereiches 11 der Manschette 10 erzielt wird. Der untere Bereich des Rührgefäßes 4 wird somit kraftschlüssig mittels der Manschette 10 gehaltert.

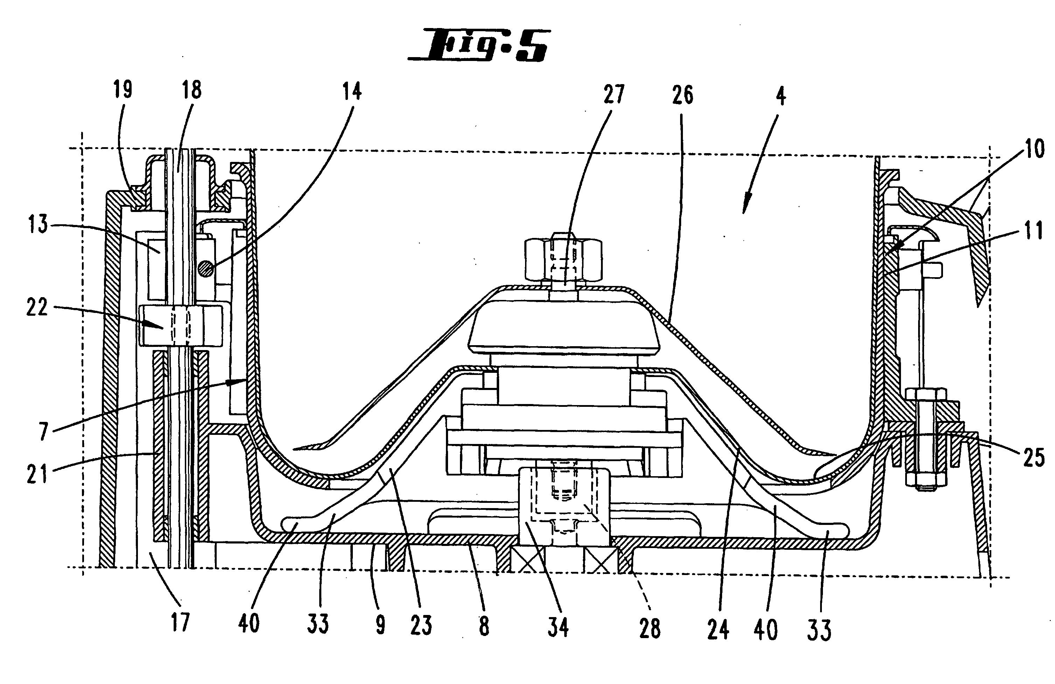

Das Rührgefäß 4 ist unterseitig, d. h. im Bereich des Rührgefäßbodens 25 mittels einer auf dem Aufnahmeboden 8 angeordneten Feder 33 in Entnahmerichtung des Rührgefäßes 4 druckbeaufschlagt. Hierzu kann, wie dargestellt, eine spiralförmige Druckfeder vorgesehen sein. Alternativ kann die Feder auch durch im Rührgefäßfuss 23 ausgebildete Federzungen 40 ausgebildet sein (siehe Fig. 5).

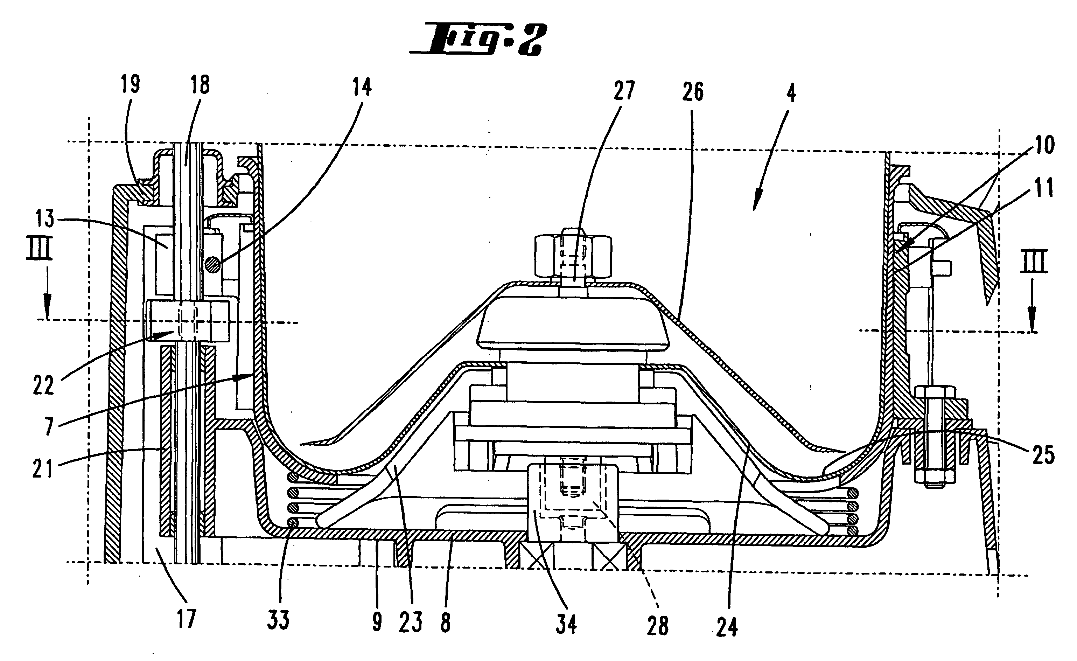

In der in Fig. 2 dargestellten Betriebsstellung ist der Rührtopf 4 entgegen der Kraft der Feder 33 in der Aufnahme 7 mittels der Manschette 10 eingespannt gehaltert.

Das Verdrehen des Handhebels 29 zur Freigabe des Dekkels 5 bewirkt zugleich ein Aufspreizen der Manschette 10, womit sich der Durchmesser des Wandbereiches 11 derselben wiederum vergrößert. Das Rührgefäß 4 ist hiernach in der Aufnahme 7 frei gegeben, womit die unterseitig gegen den Rührgefäßboden 25 wirkende Feder 33 ein Anheben des Rührgefäßes 4 in Entnahmerichtung bewirkt. Der Verlagerungsweg des Rührgefäßes 4 in Verlagerungsrichtung ist hierbei so gross bemessen, dass das Kupplungsglied 28 des Rührwerkes 26 außer Eingriff gelangt zu einer Kupplungsaufnahme 34 eines Rührwerk-Antriebes 35. Zufolge dessen bedingt ein Öffnen des Deckels 4 zugleich die mechanische Trennung von Antrieb 35 und Rührwerk 26, womit letzteres gemäß den bestehenden Sicherheitsanforderungen in weniger als 1 Sekunde zum Stillstand kommt.

Die Kraft der Feder 33 bzw. der Federzungen 40 des Rührgefäßfusses 23 ist hierbei so bemessen, dass die erfindungsgemäße Entkopplung von Antrieb 35 und Rührwerk 26, d. h. ein Anheben des Rührgefäßes 4 bei einem Öffnen des Deckels 5, auch bei gefülltem Rührgefäß 4 erfolgt.

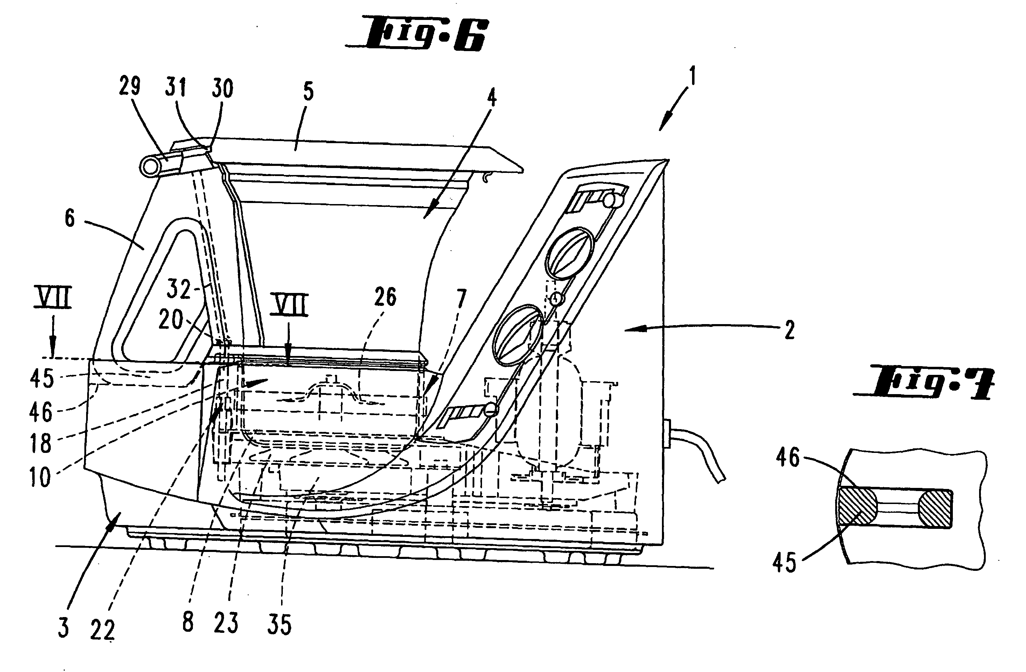

Wie in Fig. 6 dargestellt, kann der Handgriff 6 in seinem unteren Bereich mit einem zurück auf das Rührgefäß 4 weisenden Horizontalabschnitt 45 versehen sein, welcher in der Betriebsstellung in eine zugeordnete, nach oben offene und in ihrer Breite der Handgriff- bzw. Horizontalabschnittdicke angepasste Aufnahme 46 eintaucht. Zufolge dieser Ausgestaltung ist eine eindeutige Vorpositionierung von Rührgefäß 4 zur Küchenmaschine 1 und somit auch der Rührwerkwelle 27 zum Kupplungsglied 28 gegeben. Des weiteren können durch diesen Formschluss im Betrieb des Rührwerkes 26 auftretende Drehmomente aufgenommen werden.

Eine solche Ausbildung ist auch bei Rührgefäßen 4 dehkbar, welche mehrere Handgriffe aufweisen, wobei dann jedem Handgriff eine Aufnahme eindeutig zuordbar ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Küchenmaschine (1) mit einem Rührgefäß (4) und einem Antrieb (35) für ein Rührwerk (26) in einem Rührgefäß (4), wobei das Rührgefäß (4) mittels eines sicherbaren Deckels (5) verschließbar ist, **dadurch gekennzeichnet, dass** das Rührgefäß (4) gegen die Wirkung einer Feder (33) bei Verschluss des Deckels (5) mit dem Antrieb (35) gekoppelt ist derart, dass die Feder (33) das Rührgefäß (4) vom Antrieb 35 abhebt, wenn der Deckel (5) geöffnet wird.

2. Küchenmaschine nach Anspruch 1, wobei weiter das Rührgefäß (4) einen Rührgefäßfuß (23) aufweist, **dadurch gekennzeichnet, dass** der Rührgefäßfuß (23) Federzungen (40) ausbildet.

## Claims

1. Food processor (1) with a mixing vessel (4) and a drive (35) for a stirring device (26) in a mixing vessel (4), the mixing vessel (4) being lockable by means of a securable lid (5), **characterised in that** when the lid (5) is closed the mixing vessel (4) is coupled to the drive (35) against the action of a spring (33) in such a way that the spring (33) lifts the mixing vessel (4) from the drive (35) when the lid (5) is opened.

2. Food processor according to claim 1, wherein the mixing vessel (4) has a mixing vessel foot (23), **characterised in that** the mixing vessel foot (23) forms spring tongues (40).

## Revendications

1. Robot ménager (1) avec bol mixeur (4) et entraînement (35) pour un mélangeur (26) dans un bol mixeur (4), le bol mixeur (4) pouvant être fermé au moyen d'un couvercle (5) de sécurité, **caractérisé en ce qu'**à la fermeture du couvercle le bol mixeur (4) est accouplé à l'entraînement (35) contre l'action d'un ressort (33), de telle sorte que le ressort (33) soulève le bol mixeur (4) de l'entraînement (35) lorsque l'on ouvre le couvercle (5).

2. Robot ménager selon la revendication 1, le bol mixeur (4) présentant en outre un pied de bol mixeur (23), **caractérisé en ce que** le pied de bol mixeur (23) forme des lames flexibles (40).
